# EUROPEAN PATENT APPLICATION

(11) **EP 2 693 310 A1**
(43) Date of publication of application: **05.02.2014**
(21) Application number: 12178582.8
(22) Date of filing: 31.07.2012
(51) Int. Cl.: G06F 3/041, G06F 3/038, G09G 5/12

(54) **Method and apparatus pertaining to the timing of stylus location transmissions**

(71) Applicant: BlackBerry Limited, Waterloo, ON N2K 0A7 (CA)
(72) Inventor: Singh, Amit Pal, Waterloo, Ontario N2L 3W8 (CA); Robinson, James Alexander, Waterloo, Ontario N2L 3W8 (CA); Pareskh, Premal, Waterloo, Ontario N2L 3W8 (CA)
(74) Representative: Hibbert, Juliet Jane Grace

(57) **Abstract**

A stylus includes a stylus housing that contains a location-beacon transmitter, a wireless receiver, and a control circuit that operably couples to the preceding. By one approach the control circuit is configured to use the location-beacon transmitter to transmit signals as a function of at least one signal received via the wireless receiver. The aforementioned wireless receiver can comprise a Bluetooth™-compatible wireless transceiver that pairs with the corresponding display-based device. The signal received via this wireless receiver can comprise transmission-synchronization information that represents a video-display event for the display-based device such as refreshing the display of the display-based device. In such a case, the signal can comprise a vertical synchronization pulse as sourced by the display-based device. So configured, the stylus can time the transmission of its location-beacon signals to arrive at the display-based device just prior to when the latter refreshes its display.

## Description

### Field of Technology

The present disclosure relates generally to stylus-sensitive displays and to corresponding styli.

### Background

Various kinds of touch-sensitive displays are known. Some displays are particularly configured to work with a corresponding stylus. Generally speaking, a stylus is typically a hand-held writing utensil that often (but not exclusively) having a pencil-like elongated form factor and that includes at least one pointed end configured to interact with a drawing/writing surface. Using a stylus as an input mechanism with a display offers a variety of advantages over a fingertip including the opportunity for increased precision as well as an expression modality that accords with the user's own past experience with a pencil or pen.

In some cases the stylus comprises an active device that transmits a signal. This signal serves, for example, as a location beacon that the display device utilizes, for example, to confirm the proximity of the stylus and/or to facilitate accurate tracking of the stylus's movement with respect to the display. To conserve power, the stylus typically only transmits such a signal on an intermittent basis.

Unfortunately, the intermittent nature of location-beacon signal transmissions can lead to unwanted and inconsistent latency with respect to displaying the movement of the stylus across the display. Such latency can occur, for example, when the intermittent location-beacon signal arrives just after the display device refreshes the display presentation. In such a case, the representation of a line on the display that flows like ink in response to movement of the stylus across the display can lag the actual location of the stylus tip by a noticeable amount. This latency, in turn, can feel unnatural to the user and can defeat or at least impair the user's effective use of the stylus as an input mechanism.

### Brief Description of the Drawings

FIG. 1 is a perspective view in accordance with the prior art.

FIG. 2 is a flow diagram in accordance with the disclosure.

FIG. 3 is a block diagram in accordance with the disclosure.

FIG. 4 is a block diagram in accordance with the disclosure.

FIG. 5 is a schematic timing diagram in accordance with the disclosure.

### Detailed Description

The following describes an apparatus and method pertaining to a stylus having a stylus housing that contains a location-beacon transmitter, a wireless receiver, and a control circuit that operably couples to the Iocation-beacon transmitter and the wireless receiver. By one approach the control circuit is configured to use the location-beacon transmitter to transmit signals (such as pulses) as a function, at least in part, of at least one signal received via the wireless receiver.

By one approach, the aforementioned wireless receiver comprises a Bluetooth^{™}-compatible wireless transceiver that pairs with the corresponding display-based device (such as, for example, a so-called smartphone, tablet computer, and so forth).

The signal received via this wireless receiver can comprise, for example, transmission-synchronization information that represents, by one approach, a video-display event for the display-based device. If desired, and as one example in these regards, this video-display event can correspond to refreshing of the display of the display-based device. In such a case, and as one approach, the signal can comprise, at least in part, a vertical synchronization pulse as sourced by the display-based device.

So configured, the stylus can time the transmission of its location-beacon signals to arrive at the display-based device just prior to when the latter refreshes its display. This approach, in turn, permits the display-based device to refresh its display with extremely current information regarding the location of the stylus tip with respect to the display. Accordingly, the display of an ink trail as corresponds to movement of the stylus can remain more closely synchronized to the actual location of the stylus tip as the stylus tip moves across the display.

So configured the interaction between the stylus and the display more closely mimics the ordinary interaction between a pen/pencil and paper. This interaction in turn will typically better meet and satisfy the expectations of the user and facilitate a more intuitive leveraging of the user's own experience and skills with a pen/pencil.

These teachings are readily scaled to accommodate essentially any size of display or stylus. These teachings are also highly flexible in practice and will accommodate a variety of active location/presence transmission methodologies.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

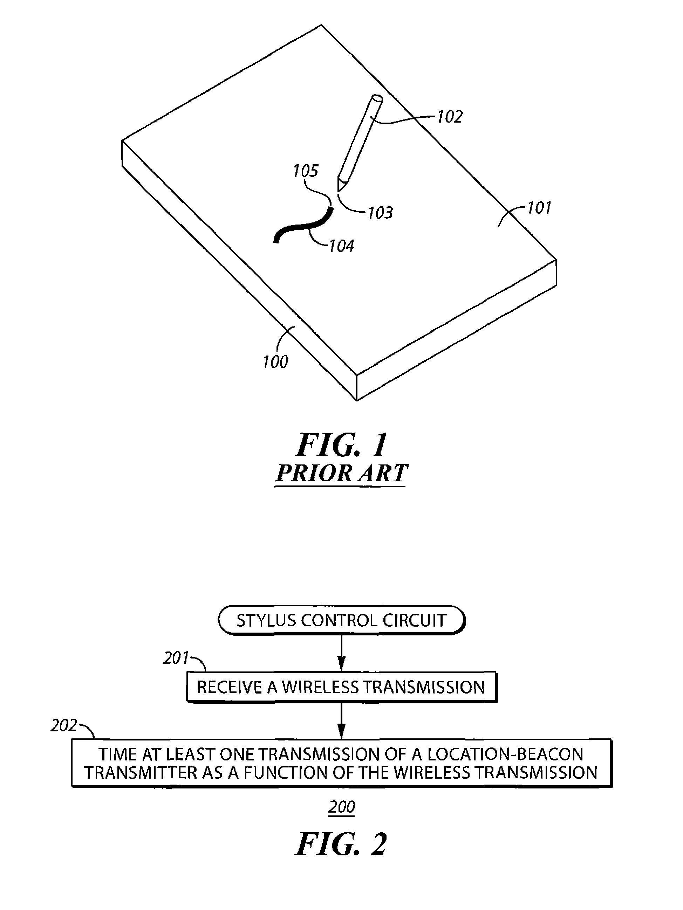

Before describing these concepts in more detail, however, it may be useful to recall the problem being addressed. FIG. 1 provides a representative illustration in these regards.

In this illustrative example, a display-based device 100 has a display 101 that detects and responds to the contact and movement of a corresponding stylus 102. In particular, the display-based device 100 tracks and represents the movement of the stylus tip 103 across the display 101 with a corresponding persisting rendering of an "ink" line 104 (i.e., a line of appropriate thickness that follows the traveling path of the stylus tip 103). Because of a delay between the time the display-based device 100 receives location updates as regards the stylus location and the time the device 100 actually refreshes the display 101 in this example, the trailing end 105 of the line 104 lags the actual location of the stylus tip 103 by a visually noticeable amount.

Such a gap, in turn, can cause the user to delay their hand movements and/or can lead to registration errors or confusion involving specific locations and/or precision of movement. What is more, the size of the gap is not only dependent upon the speed at which the user moves the stylus tip 103 but can also vary anecdotally from use to use as the amount of the aforementioned delay can vary from use to use. As a result, a user cannot train themselves very well to try and compensate for such a gap as the size of the gap is so variable.

FIG. 2 presents a process 200 to at least ameliorate such a problem. For the sake of illustration but without intending any particular limitations in these regards it will be presumed in this description that a stylus control circuit of choice carries out this process 200. Further description will be provided below regarding such a control circuit.

This process 200 provides generally for receiving 201 a wireless transmission and then timing 202 at least one transmission of a location-beacon transmitter as a function of that wireless transmission. That received transmission can comprise, by one approach, a wireless transmission of transmission-synchronization information that represents, for example, a given predetermined video-display event. As one illustrative example in these regards, and without intending any corresponding limitations by way of this specificity, that video-display event can comprise a vertical synchronization (VSYNC) pulse.

As is known in the art, vertical synchronization (sync) typically separates video fields. Pursuant to the phase alternating line (PAL) and national television system committee (NTSC) video standards, a vertical sync pulse occurs within a vertical blanking interval. The vertical sync signal can comprise, for example, a series of relatively long pulses that thereby indicate the start of a new field. These synchronization pulses can occupy the whole of a line interval of a number of lines at the beginning and end of a scan with no picture information being transmitted during vertical retrace.

Accordingly, the VSYNC pulse (as transmitted to the stylus control circuit from a display-based device) comprises a useful indication that the display-based device is about to refresh the video display. By one approach, the stylus control circuit is configured to time 202 the transmission of its location-beacon transmitter by making that transmission as an immediate response to reception of the aforementioned wireless transmission. So configured, the display-based device will receive the stylus location information just prior to refreshing the display. This, in turn, will permit the display to present a very recent depiction of the stylus's location and thereby reduce if not completely avoid the aforementioned latency and gap in the rendered line.

In the example above it will be understood that the expression "immediate" does not literally always mean without delay. Instead, a variety of signal propagation and processing delays will typically result in some amount of latency (such as 1 to 4 milliseconds). Accordingly, it will be understood that as used herein the expression "immediate" refers to as soon as possible in practical terms given the physics of the application setting.

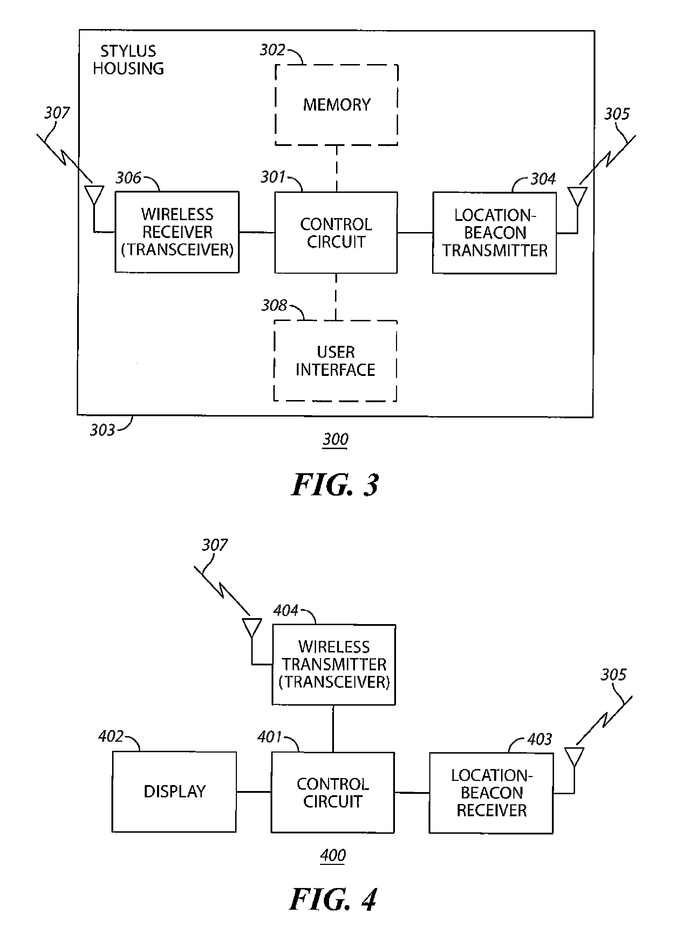

FIG. 3 provides an illustrative example of a stylus 300 that complies with the foregoing approaches. This stylus 300 includes a control circuit 301 that can comprise a fixed-purpose hard-wired platform or that can comprise a partially or wholly programmable platform. These architectural options are well known and understood in the art and require no further description here. This control circuit 301 is configured (for example, by using corresponding programming as will be well understood by those skilled in the art) to carry out one or more of the steps, actions, and/or functions described herein.

By one optional approach the control circuit 301 operably couples to a memory 302. This memory 302 may be integral to the control circuit 301 or can be physically discrete (in whole or in part) from the control circuit 301 as desired. This memory 302 can serve, for example, to non-transitorily store computer instructions that, when executed by the control circuit 301, cause the control circuit 301 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM).)

The foregoing components are disposed within a stylus housing 303 of choice. Although such housings are often more-or-less pencil or pen shaped, other form factors are also used for a variety of reasons ranging from the merely visually aesthetic to the ergonomically founded (to provide, for example, a particularly firm or comfortable grip). As the present teachings are not particularly sensitive to any particular selections in these regards, further elaboration in these regards is not presented here.

This illustrative stylus 300 also includes a location-beacon transmitter 304 (disposed at least in part within the stylus housing 303) that operably couples to the control circuit 301 and that selectively transmits a location-beacon wireless signal 305 using a carrier frequency (or band of frequencies), modulation, and signal protocol of choice. Such location beacons are also well known in the art as are a multitude of approaches to wirelessly conveying that information. Therefore, for the sake of brevity and clarity, further details in these regards are not presented here aside from noting that it can be helpful in many application settings if the location-beacon transmitter 304 is configured to transmit the location-beacon signal as intermittent pulses rather than as a continuously-transmitted signal.

As shown in FIG. 3 this illustrative stylus 300 also includes a wireless receiver 306 (that is also disposed at least in part within the stylus housing 303). This wireless receiver 306 can comprise, if desired, a wireless transceiver that, in any event, operatively couples to the control circuit 301. So configured, the control circuit 301 can receive the aforementioned transmission-synchronization information 307 from a corresponding display-based device via this wireless receiver 306.

By one approach, this wireless receiver 306 utilizes a short-range protocol. This can comprise, for example, having the wireless receiver 306 comprise a Bluetooth^{™}-compatible wireless receiver, the Bluetooth^{™} standard being well known in the art. To facilitate such an approach the stylus 300 can further optionally include a user interface 308 such as, for example, one or two push buttons or the like. Such a user interface 308 can facilitate, for example, the control circuit 301 pairing the wireless receiver 306 with the source(s) of wireless signals to be received by the wireless receiver 306. Pairing of Bluetooth^{™} components comprises a well known area of endeavor that requires no further explanation here.

So configured, the control circuit 301 can have sufficient information and enabling interfaces to facilitate causing the transmission of stylus-location signals as a function, at least in part, of information regarding video-display events by reacting to the receipt of such information as a present trigger to cause the transmission of at least one of those stylus-location signals.

The foregoing presumes the use of a wireless transmission that comprises, at least in part, information regarding at least one video-display event as corresponds to a given display-based device. FIG. 4 provides an illustrative example in these regards. It will be understood that no particular limitations are intended with respect to the specifics of this example.

This display-based device 400 can comprise, for example, a smartphone or tablet-based computer of choice. In this example the display-based device 400 includes a control circuit 401 that operably couples to a display 402 (such as a touch-sensitive display of choice). The display-based device 400 also includes a location-beacon receiver 403 that operably couples to the control circuit 401 and that serves to receive the aforementioned stylus location-beacon transmissions 305. The foregoing components and their manner of intercoupling and usage comprise well understood areas of endeavor.

Pursuant to these teachings this display-based device 400 further includes a wireless transmitter 404 (which can, if desired, comprise a part of a wireless transceiver). This wireless transmitter 404 operably couples to the control circuit 401 and serves to selectively transmit the aforementioned information 307 regarding one or more video-display events (and hence may comprise, or pertain to, a vertical synchronization pulse or other relevant indicator of choice). In accord with possibilities noted above this wireless transmitter 404 can comprise, if desired, a Bluetooth^{™}-compatible transmitter that can pair with and communicate compatibly with the wireless receiver 306 of the stylus 300.

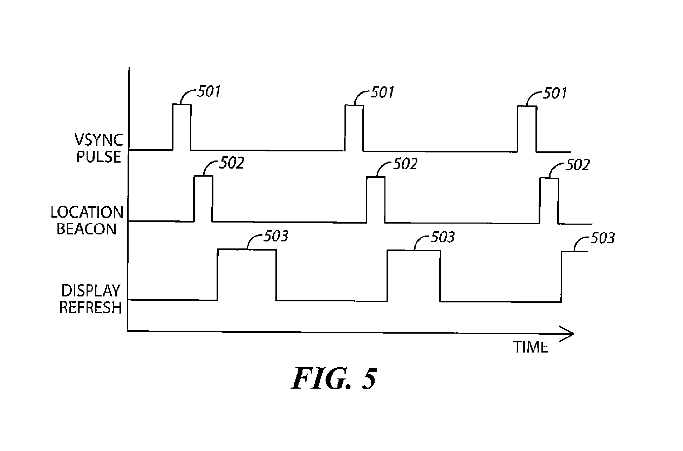

FIG. 5 provides one illustrative example as to how such a stylus 300 and display-based device 400 can interact with one another. As shown, the display-based device 400 can transmit VSYNC pulses 501 that are received by the stylus 300. In this illustrative example these pulses 501 are transmitted periodically and effectively represent each refreshing of the display-based device's display 402. These teachings will accommodate other approaches in these regards, however. By one approach, for example, only every other VSYNC pulse 501 might be transmitted. As another example, only one such VSYNC pulse 501 might be sent every, say, one second, five seconds, ten seconds, or some other duration of choice. Generally speaking, the more frequently these pulses 501 are sent, the more likely the stylus 300 can remain closely synchronized with the display refreshing schedule of the display-based device 400.

The stylus 300, in turn, can time the transmission of some or all of its location-beacon signals 502 as a function, at least in part, of the received VSYNC pulses 501. This can comprise, for example, having the stylus 300 react to reception of a VSYNC pulse 501 as a present trigger to cause the transmission of a corresponding location-beacon signal 502.

So configured, it can be seen that the transmitted location-beacon signals 502 are available to the display-based device 400 just prior to the refreshing of the display 503. As a result, the updated display can provide a display of, for example, virtual ink that represents at least a very recent location of the stylus 300 with respect to the display 402. So configured, any gap between the end of a corresponding rendered line and the actual present location of the stylus tip can be consistently minimized and possibly even eliminated.

It will be appreciated that such an approach can provide a better and more consistent user experience in a highly transparent manner that requires little, or possibly no, specific incremental action on the part of the user to effect.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus comprising:
a stylus housing (303);
a location-beacon transmitter (304) at least partially disposed within the stylus housing;
a wireless receiver (306) at least partially disposed within the stylus housing;
a control circuit (301) at least partially disposed within the stylus housing and operably coupled to the location-beacon transmitter and the wireless receiver, and configured to use the location-beacon transmitter to transmit signals (305) as a function, at least in part, of at least one signal (307) received via the wireless receiver.

2. The apparatus of claim 1 wherein the location-beacon transmitter is configured to transmit pulses (502).

3. The apparatus of claim 1 wherein the wireless receiver comprises a Bluetooth^{™}-compatible wireless receiver.

4. The apparatus of claim 1 wherein the signal received via the wireless receiver comprises transmission-synchronization information (501).

5. The apparatus of claim 1 wherein the wireless receiver comprises a wireless transceiver by which the control circuit pairs with a source (400) of the signal that is received via the wireless receiver.

6. A method comprising:
by a control circuit (301) that comprises a part of a stylus (300);
receiving (201) a wireless transmission (307);
timing (202) at least one transmission (305) of a location-beacon transmitter (304) as a function of the wireless transmission.

7. The method of claim 6 wherein the wireless transmission represents a video-display event.

8. The apparatus of claim 1 further comprising:
a display-based device (400) having:
- a wireless transmitter (404) configured to transmit information (307) regarding at least one video-display event;
- a wireless receiver (403) configured to receive the signal (305) transmitted by the location-beacon transmitter.

9. The apparatus of claim 8 wherein the video-display event pertains to a refreshing of the display, such that the display-based device receives the signals from the stylus just prior to refreshing the display.

10. The apparatus of claim 9 wherein the video-display event comprises a vertical synchronization (VSYNC) pulse (501).

11. The apparatus of claim 8 wherein the wireless transmitter of the display-based device comprises a Bluetooth^{™}-compatible transmitter and the wireless receiver of the stylus comprises a Bluetooth^{™}-compatible receiver that is paired to the Bluetooth^{™}-compatible transmitter.

12. The apparatus of claim 8 wherein the control circuit is configured to cause the transmission of the signals as a function, at least in part, of the information regarding the at least one video-display event by reacting to the information as a present trigger to cause the transmission of at least one of the signals.
